# EUROPÄISCHE PATENTSCHRIFT

(11) **EP 4 132 977 B1**
(45) Veröffentlichungstag und Bekanntmachung des Hinweises auf die Patenterteilung: **18.11.2026**
(21) Anmeldenummer: 21722769.3
(22) Anmeldetag: 08.04.2021
(51) Int. Cl.: C08B 11/20, C08B 15/00

(54) **ANQUELLVERZÖGERTE CELLULOSEETHER MIT REDUZIERTEM GLYOXALGEHALT**
CELLULOSEETHER WITH REDUCED GLYOXAL CONTENT AND DELAYED SWELLING
ÉTHER DE CELLULOSE À TENEUR EN GLYOXAL RÉDUITE ET GONFLEMENT RETARDÉ

(30) Priorität: 09.04.2020 DE 102020110058
(43) Veröffentlichungstag der Anmeldung: 15.02.2023
(73) Patentinhaber: SE Tylose GmbH & Co.KG, 65203 Wiesbaden (DE)
(72) Erfinder: WOHLGEFAHRT, Sarah, 65203 Wiesbaden (DE); ESSER, Veronique, 65203 Wiesbaden (DE)
(74) Vertreter: Plate, Jürgen
(86) Internationale Anmeldenummer: PCT/EP2021/059206
(87) Internationale Veröffentlichungsnummer: WO 2021/204957

(56) Entgegenhaltungen:
- EP-A1- 1 452 544
- EP-A1- 2 177 538
- DE-A1- 10 136 450
- DE-B- 1 239 672
- GB-A- 1 465 934
- US-A1- 2015 203 596

## Beschreibung

Die vorliegende Erfindung betrifft ein Verfahren zur Herstellung von Cellulosederivaten, die mit Glyoxal reversibel vernetzt und dadurch verzögert wasserlöslich sind.

Celluloseether erfahren aufgrund ihrer ausgezeichneten Eigenschaften, wie Quell-, Gelbildungs- und Löseverhaltens eine vielseitige Verwendung beispielsweise als Verdicker, Kleber, Binde- und Dispergiermittel, Wasserrückhaltemittel, Schutzkolloide, Stabilisatoren sowie als Suspendier- und Emulgiermittel und Filmbildner.

Dabei müssen die Celluloseether klumpenfrei gelöst, dispergiert oder emulgiert werden. Das Lösen eines Celluloseethers in trockener Pulverform in Wasser führt jedoch häufig zur Oberflächenvergelung und Verklumpung. Dieses Problem kann durch die Behandlung mit ausreichenden Mengen an Dialdehyden, insbesondere Glyoxal, gelöst werden. Durch die Bildung von Halbacetalen, die einem sauren katalytischen Mechanismus unterliegt, wird eine reversible Vernetzung bewirkt, die ohne wesentliche Beeinflussung der Löslichkeit die Dispergierbarkeit verbessert, die Auflösung in Wasser verzögert und die Klumpenbildung verhindert. Diese Löseverzögerung kann durch die Erhöhung des pH-Wertes reduziert werden ("Cellulose Ethers", Kapitel 2.1., Ullmann's Encyclopedia of Industrial Chemistry, 2006, Wiley-VCH Verlag GmbH, Weinheim, Germany).

In der WO 2017/064164 A1 ist ein Celluloseether offenbart, der mit einem Glyoxylsäure-(C₁-C₄)alkylester-mono(C₁-C₄)alkylacetal temporär vernetzt ist. Der Anteil des Vemetzers beträgt bevorzugt 0,01 bis 10 Gewichtsteile pro 100 Gewichtsteile des Celluloseethers. Gegenstand der EP 2 177 538 A1 ist ein Alkyl- und Hydroxyethylgruppen enthaltender Celluloseether, der mit einem Vernetzer vermischt und anschließend mahlgetrocknet wurde. Der Vernetzer ist bevorzugt ein Mono- oder Dialdehyd, besonders bevorzugt Glyoxal. Gemäß der US 2019//0062458 A1 wird eine vernetzte, nicht wasserlösliche Cellulose für die Herstellung von Membranen oder Hydrogelen eingesetzt. Der Vernetzer kann ein Aldehyd, ein Organochlorid, ein Ether, eine multifunktionelle Carbonsäure, Glycerin, ein Hamstoff-Derivat und/oder ein Glycidylether sein.

Aus der DE 10 75 773 war es bekannt, für eine verbesserte Löslichkeit bzw. zur Verhinderung der Agglomeration während des Lösens Celluloseether mit Glyoxal zu vernetzen. Hierzu wurde der Celluloseether in Aceton suspendiert und eine wässrige Glyoxallösung zugegeben.

US 3072635 beschreibt ein Verfahren zur Herstellung wasserdispergierbarer Cellulosederviate durch die Behandlung mit 0,001 bis 0,2 mol Glyoxal pro mol Anhydroglucoseeinheit des Celluloseethers, wobei das Glyoxal in Alkohol gelöst wurde und bevorzugt Mengen an Glyoxal größer 1,25 bis 5,0 Gew.-% im Celluloseether enthalten sind.

Aus DE 12 39 672 war unter anderem bekannt, dass der Grad der Vernetzung und damit die Löseverzögerung mit der Menge an Glyoxal gesteuert werden kann. Dies kann aus den aufgeführten Beispielen entnommen werden. Dabei wird wasserlösliche Methylcellulose mit 0,001 bis 0,2 mol Glyoxal pro mol Anhydroglucoseeinheit der Methylcellulose bei einem pH-Wert zwischen 2 bis 7 homogen verknetet, getrocknet und zerkleinert. Es wird gezeigt, dass 0,48 Gew.-% Glyoxal im Cellulosederivat bei einem pH-Wert von 2 (eingestellt mit Phosphorsäure) nur zu einer 15-minütigen Anquellverzögerung führt. Es werden keine Angaben zu ungebundenem Glyoxalgehalt gemacht. Ferner werden auch keine Vernetzungen bei höheren pH-Werten dargestellt und deren Anquellverzögerung beschrieben.

In der EP 0 597 364 ist ein Verfahren offenbart, bei dem zu der Glyoxallösung Natriumdihydrogenphosphat zugesetzt wird.

Gegenstand der EP 1 316 563 A1 ist ein Verfahren zur Herstellung von mit Glyoxal vernetzten Celluloseethem ohne Zusatz von sauren Katalysatoren. Dabei ist der Viskositätsabbau vermindert unter Erhöhung des pH-Wertes des Celluloseethers. Es muss beachtet werden, dass die Anquellverzögerung durch die Erhöhung des pH-Wertes gesenkt wird. Die Verzögerungszeit einer mit 1,7 Gew.-% Glyoxal enthaltenden Methylhydroxyethylcellulose MHEC mit einem pH von 6,2 beträgt nur 20 min in vollentsalztem Wasser gegenüber einer Verzögerungszeit von 60 min einer vernetzten MHEC mit 2,0 Gew.-% Glyoxal mit einem pH von 4,7.

Das Glyoxal wird nach der CLP-Verordnung (Verordnung (EG) Nr. 1272/2008) als reizend sowie sensibilisierend eingestuft und es wird eine mutagene Wirkung auf den Menschen angenommen. Ein Produkt mit einem Gehalt an freiem Glyoxal von 0,1 % bis 1 % muss im Einklang mit der CLP-Verordnung entsprechend gekennzeichnet sein. Im Personal Care Bereich ist der Einsatz glyoxalvernetzter Celluloseether ebenfalls möglich, wenn der Hersteller kosmetischer Produkte sicherstellt, dass das Endprodukt die erlaubte Konzentration von 100 ppm Glyoxal (SCCP/0881/05) nicht überschreitet. Da beim Auflösen des Celluloseethers in wässrigem Medium das für die reversible Vernetzung verwendete Glyoxal wieder freigesetzt wird, ist nicht nur das ungebundene, sondern die gesamte Menge an Glyoxal im Endprodukt aufgrund der Einstufungen in der CLP-Verordnung so gering wie möglich zu halten.

In der EP 1 452 544 B1 ist ein Verfahren beschrieben, bei dem Celluloseether mit vermindertem ungebundenen Glyoxalgehalt durch Zusatz von wasserlöslichen Boraten oder Aluminiumsalze zur phosphatgepufferten Vernetzerlösung hergestellt werden. Auch hier wird ersichtlich, dass zwar die Menge an ungebundenen Glyoxal gesenkt werden kann, aber durch die Zugabe an Natriumtetraborat und die damit einhergehende pH-Steigerung es zu einer Reduzierung der Anquellverzögerung kommt. Weiterhin sind keine Anmerkungen zur Lagerstabilität zu entnehmen. Zusätzlich ist jedoch der Effekt der Glyoxalreduzierung gering und die zusätzlich eingesetzten Additive sind toxikologisch ebenfalls nicht unbedenklich.

In der WO 2012/122153 A1 ist ein Dry-Blend aus handelsüblichem, mit Glyoxal reversibel vernetztem Celluloseether und einer pulverförmigen, festen, wasserlöslichen Polycarbonsäure, die teilweise neutralisiert ist. Die Säure ist bevorzugt eine teilweise neutralisierte Poly(meth)acrylsäure, Polymaleinsäure, Citronensäure, Adipinsäure, Oxalsäure, Malonsäure oder Glutarsäure. Beim Einrühren des vernetzten Celluloseethers in Wasser vermindert die Säure den pH-Wert, so dass sich die Halbacetal-Bindungen langsamer lösen und eine Klumpenbildung vermieden wird. Gegenstand der WO 2014/175903 ist ein Verfahren zum klumpenfreien Dispergieren einer trockenen Celluloseether-Formulierung in eine wässrige Lösung. Die Celluloseether-Formulierung umfasst einen reversibel vernetzten Celluloseether und eine feste, wasserlösliche Säure, bevorzugt Citronensäure, Weinsäure, Oxalsäure, Malonsäure oder Poly(meth)acrylsäure. Die Formulierung ist gleichermaßen ein Dry-Blend aus einem handelsüblichen vernetzten Celluloseether und einer Säure.

DE10136450A1 (WOLFF WALSRODE AG [DE]) 6. Februar 2003 offenbart die Vernetzung von Cellulosederivaten mit Glyoxal in Gegenwart eines Phosphatpuffers und einer organischen Säure.

Ziel der vorliegenden Erfindung ist es, den Gehalt an gebundenem und ungebundenem Glyoxal in einem Celluloseether zu vermindern, ohne die Eigenschaften des Celluloseethers, insbesondere die Anquellverzögerung und die Viskosität, zu verändern. Dadurch soll das Gesundheitsrisiko erheblich minimiert werden und eine Kennzeichnungspflicht entfallen.

Unerwarteter Weise wurde gefunden, dass durch die Zugabe von sauren organischen Katalysatoren, speziell von ein- oder mehrwertigen oder aromatischen organischen Säuren, zur Glyoxallösung, gepuffert mit Alkali- oder Erdalkalisalzen der Phosphorsäure, die Effizienz der Glyoxalvernetzung gesteigert werden kann, so dass die Einsatzmenge an Glyoxal deutlich reduziert werden kann. Die Anquellverzögerung des erfindungsgemäß hergestellten Celluloseethers mit reduziertem Glyoxalgehalt ist vergleichbar mit der eines nach dem Stand der Technik hergestellten Celluloseethers. Der zu erwartende Viskositätsabbau durch die pH-Senkung des Produktes trat überraschenderweise nicht ein.

Gegenstand der Erfindung ist somit ein Verfahren zur Herstellung von Cellulosederivaten, die mit Glyoxal reversibel vernetzt und dadurch verzögert wasserlöslich sind, mit den Schritten:
a) Bereitstellen eines wasserfeuchten Cellulosederivats
b) Bereitstellen einer wässrigen Lösung, die Glyoxal, ein und/oder mehrere Erdalkali- und/oder Alkalisalze der Phosphorsäure als Puffersubstanz enthält,
c) Mischen der wässrigen Lösung aus b) mit dem Cellulosederivat aus a) bei einer Temperatur zwischen 20 bis 70 °C, um eine reversible Vemetzung des Cellulosederivats zu erreichen,
d) Trocknen des reversibel vernetzten Cellulosederivats und
e) Mahlen des Cellulosederivat,
wobei die Schritte d) und e) zu einer Mahltrocknung kombiniert sein können,
wobei das Verfahren dadurch gekennzeichnet ist, dass die wässrige Lösung gemäß b) eine ein- oder mehrwertige organische Säure enthält, wobei die Menge der ein- oder mehrwertigen organischen Säure 0,002 bis 0,015 mol und die Menge des Glyoxals 0,010 bis 0,030 mol beträgt, jeweils bezogen auf 1 mol Anhydroglukoseeinheiten des Cellulosederivats und das molare Verhältnis von einwertiger organischer Säure zu Glyoxal im Bereich von 1 zu 1 bis 1 zu 6, bevorzugt von 1 zu 1 bis 1 zu 4, das Verhältnis von zweiwertiger organischer Säure zu Glyoxal im Bereich von 1 zu 1 bis 1 zu 10, bevorzugt von 1 zu 2 bis 1 zu 6, und das molare Verhältnis von dreiwertiger organischer Säure zu Glyoxal im Bereich von 1 zu 2 bis 1 zu 12, bevorzugt von 1 zu 3 bis zu 1 zu 8, liegt.

Gegenstand der Erfindung sind daneben die nach dem genannten Verfahren hergestellten reversibel vernetzten Cellulosederivate als solche, d.h. reversibel mit Glyoxal vernetzte Cellulosederivate, die dadurch gekennzeichnet sind, dass der Anteil der ein- oder mehrwertigen organischen Säure 0,002 bis 0,015 mol und die Menge des Glyoxals 0,010 bis 0,050 mol beträgt, jeweils bezogen auf 1 mol Anhydroglukoseeinheiten des Cellulosederivats und das molare Verhältnis von ein- oder mehrwertiger organischer Säure zu Glyoxal im Bereich von 1 zu 2 bis 1 zu 12 liegt. Die erfindungsgemäßen reversibel vernetzten Cellulosederivate enthalten bevorzugt weniger als 1.000 ppm an freiem Glyoxal.

Die organischen Säuren sind aliphatische, aromatische und/oder heterocyclische vorzugsweise C1-C7-Carbonsäuren mit ein bis drei Carboxylgruppen, die auch funktionelle Gruppen, z.B. Hydroxylgruppen und/oder Aminogruppen, aufweisen können. Die aromatischen und heterocyclischen Säuren können weiterhin als Heteroatom Stickstoff, Sauerstoff oder Schwefel besitzen. Die aliphatischen Säuren können ebenfalls mindestens eine Doppelbindung aufweisen. Besonders bevorzugt werden Säuren eingesetzt, die im pharmazeutischen und/oder Lebensmittel-Bereich Anwendung finden. Für die Monocarbonsäuren mit einem pKs-Bereich von größer gleich 2,5 und kleiner 5 sind dies Essigsäure, Milchsäure und Salicylsäure und für die Di- oder Tricarbonsäuren mit einem pKs₁-Bereich von 2,5 bis 5 und einem pKs₂ kleiner gleich 6 sind dies bevorzugt Adipin-, Wein- oder Äpfelsäure. Allgemein bevorzugt sind Carbonsäuren die unter Normalbedingungen fest sind. Sie lassen sich auch leichter dosieren. Essigsäure ist weniger bevorzugt wegen des intensiven Geruchs und der relativ leichten Flüchtigkeit. Die Menge an Säure beträgt 0,002 bis 0,015 mol, besonders bevorzugt 0,004 bis 0,010 mol, jeweils bezogen auf 1 mol Anhydroglucoseeinheiten des Celluloseethers.

Glyoxal wird vorzugsweise als eine etwa 40 gew-%ige wässrige Lösung eingesetzt. Die Menge an Glyoxal beträgt 0,010 bis 0,050 mol, besonders bevorzugt 0,015 bis 0,025 mol, jeweils bezogen auf 1 mol Anhydroglucoseeinheiten des Celluloseethers.

Als Puffer werden die Alkali- oder Erdalkalisalze der Phosphorsäure, besonders bevorzugt die Alkalisalze der Phosphorsäure verwendet, ganz besonders bevorzugt Natriumdihydrogenphosphat-monohydrat und Dinatriumhydrogenphosphat. Die Menge an Natriumdihydrogenphosphat und Dinatriumhydrogenphosphat beträgt jeweils bevorzugt 0,003 bis 0,015 mol, besonders bevorzugt jeweils 0,005 bis 0,009 mol, jeweils bezogen auf 1 mol an Anhydroglucoseeinheiten des Celluloseethers.

Als Cellulosederivat wird bevorzugt ein nach Heißwasserwäsche erhaltener wasserfeuchter Celluloseether mit einer Feuchte von 30 bis 70 Gew.-% eingesetzt. Dieser wasserfeuchte Celluloseether wird dabei mit einer Lösung, bevorzugt wässrig, bestehend aus der zu verwendenden Säure, aus den Phosphatsalzen und aus Glyoxal verknetet, anschließend getrocknet und gemahlen oder einer Mahltrocknung unterworfen. Diese Lösung wird zur pH-Werteinstellung und zur Erhöhung der Effizienz der Glyoxalvernetzung genutzt. Dadurch kann die eingesetzte Menge an Glyoxal deutlich reduziert werden, während gleiche Anquellverzögerungen wie ein Celluloseether, hergestellt nach dem Stand der Technik, erhalten werden.

### Beispiele

In den nachfolgend aufgeführten Tabellen und in den Beispielen sind die prozentualen Anteile in Gewichtsprozenten angegeben.

Für die Überprüfung der Lagerstabilität der erfindungsgemäß hergestellten Celluloseether wird die Alterung der Proben mit einem Schnelltest in Anlehnung an ASTM D6819 simuliert. Dazu werden die lufttrocknen Celluloseether in Gläser mit temperaturbeständigen und dichten Verschlusskappen überführt. Es ist darauf zu achten, dass das Verhältnis von Masse der zu alternden Probe zum Volumen des Glases immer identisch ist (2,76 g Celluloseether absolut trocken (atro) in 100 ml). Anschließend wird die Probe auf eine konstante Feuchte von 10 Gew.-% eingestellt und bei 100 °C für 6 h gelagert.

Die angegebenen Löseverzögerungen wurden mit einem Viscograph der Firma Brabender (eintourig 75 UpM, Messdose 250 cmg, Messtopf und Messfühler mit Stiften) in wässriger Lösung (mit Leitungswasser, bei 20 °C) vermessen. Anquellzeit AZ ist die Zeit in Minuten zwischen der Zugabe des Produktes und dem Erreichen einer Viskosität von 100 Brabender-Einheiten (BE) = 65 mPa·s. Endlösezeit EZ ist die Zeit in Minuten nach der keine Viskositätszunahme mehr erfolgt. Aus nachstehender Tabelle sind für die einzelnen Viskositätsstufen die Konzentration der Messlösung, die Einwaage an Substanz und die Menge an Lösewasser zu entnehmen.

| **Viskositätsstufe** | **Konzentration der Messlösung** | **Einwaage an Substanz** | **Lösewasser** |
|---|---|---|---|
| **[mPa*s]** | **[%]** | **[g]** | **[g]** |
| ≤ 50 | 5 | 21,5 | 409 |
| > 50 / ≤ 150 | 4 | 17,2 | 413 |
| > 150 / < 600 | 3 | 12,9 | 417 |
| 600 - 1500 | 2,5 | 10,75 | 419 |
| 2000 - 4000 | 2 | 8,6 | 421 |
| > 4000 - 30000 | 1,5 | 6,45 | 424 |
| > 30000 | 1 | 4,3 | 426 |

Der pH-Wert des Celluloseethers wurde aus einer 1 gew.-%igen wässrigen Lösung des absolut trockenen Celluloseethers mittels eines pH-Meters mit pH-Einstabmesskette bestimmt.

Die Viskosität der Celluloseether wurde mit einem Rotationsviskosimeter der Firma Brookfield (Modell DVI) unter Verwendung einer Spindel Nr. 5 für die Viskositätsstufe 16000 mPa·s und einer Spindel 4 für die Viskositätsstufe 5000 mPa·s mit einer Umdrehungsgeschwindigkeit von 20 U/min aus einer 1,9 gew.-%igen wässrigen Lösung des absolut trockenen Celluloseethers bei 20 °C gemessen. Dabei wurde Wasser mit einem Härtegrad von 20°dH zur Herstellung der Probelösung verwendet.

Die quantitative Bestimmung des Methoxy- (-OCH₃), Hydroxyethyl- (-OC₂H₄) bzw. Hydroxypropyl- (-OC₃H₆) Gehaltes und Berechnung von DS (durchschnittlicher Substitutionsgrad) und MS (molarer Substitutionsgrad) wurde nach der dem Fachmann bekannten Zeisel-Methode, durch Umsetzung mit lodwasserstoffsäure und anschließender GC-Analyse der entstandenen Alkyliodide nach *Z.* Anal. Chem. 286 [1977] 161 - 190 ermittelt.

Der Gesamtgehalt an Glyoxal wurde colorimetrisch durch die Umsetzung des gelösten Glyoxals mit 3-Methyl-2-benzothiazolinon-hydrazonhydrochlorid (MBTH) im sauren Milieu ermittelt. Dazu wurden 0,1 g lufttrockener Celluloseether in 100 g destilliertem Wasser für 24 h gelöst. Der Lösevorgang durfte dabei nicht durch Alkalischstellen beschleunigt werden. 2 ml der Celluloseether-Lösung wurden in das Reaktionsgefäß pipettiert und 5 ml der Reagenzlösung (bestehend aus 0,2 g MBTH, 10 g VE-Wasser und 40 g Eisessig) dazu pipettiert. Die Reaktionsgefäße wurden verschlossen, die Reaktionsgemische kurz durch Schütteln vermischt und 2 h im Dunkeln stehen gelassen. Nach 2 h Reaktionszeit wurde die Extinktion der Probe und der Nullprobe in einer 1 cm Küvette im Photometer CADAS 100 von Dr. Lange bei 405 nm gemessen. Die Extinktion der Probe musste zwischen 0,100 und 2,000 liegen. Bei einer Extinktion unter 0,100 ist das Ergebnis mit < 400 ppm Glyoxal anzugeben. Wenn die Extinktion über 2,000 lag, wurde die CE-Lösung vor der Reaktion per Verdünnungsreihe verdünnt.

### BERECHNUNG

$\frac{\left({E}_{P}-{E}_{0}\right) * 4 , 207 * 100 * F}{E} = ppm Glyoxal$
E_{P} = Extinktion Probe
E₀ = Extinktion Nullprobe
F = Faktor der Verdünnung
E = Einwaage in g
4,207 = Steigung der Kalibriergeraden

Zur Bestimmung des freien, d.h. nicht gebundenen Glyoxals wurden 0,2 g des luftgetrockneten Celluloseethers mit 10 ml Tetrahydrofuran versetzt. Für 4 h wurde diese THF-Celluloseether-Suspension mit einer Schüttelmaschine geschüttelt und danach über einen Faltenfilter in ein Reagenzglas filtriert. 2 ml des Extraktes wurden mit 5 ml MBTH-Reagenzlösung bestehend aus 0,2 g MBTH, 10 g VE-Wasser und 40 g Eisessig) versetzt, für 2 h im Dunkeln stehen gelassen und anschließend mittels Colorimetrie (Photometer, CADAS 100 von Dr. Lange) bei 405 nm vermessen (siehe Arbeitsschritte bei der Bestimmung des Gesamtgehalts an Glyoxal).

### Beispiel 1

Wasserfeuchte Methylhydroxethylcellulose MHEC (200 g Trockensubstanz) mit einem durchschnittlichen Substitutionsgrad DS(Methyl) von 1,55 (der DS bezeichnet die durchschnittliche Anzahl der Methylgruppen pro Anhydroglucoseeinheit) und einen molaren Substitutionsgrad MS(Hydroxyethyl) von 0,22 (der MS bezeichnet die durchschnittliche Zahl der Hydroxyethylgruppen pro Anhydroglucoseeinheit) und einer Viskosität von 16000 mPa·s, wurde in einem Laborkneter Typ LK5 der Firma Erweka Apparatebau GmbH vorgelegt und dort mit einer wässrigen Lösung aus Wasser, Zitronensäure, Natronlauge und Glyoxal vermischt. Die Zielfeuchte der MHEC von 73 % wurde dabei mit Eis eingestellt. Nach vollständiger Zugabe wurde alles für 30 min verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % sollte erreicht werden.

| Ansatz-Nr. | 1 (Vergleich) |
|---|---|
| **Puffer** | |
| NaOH/AGU(MHEC) (mol/mol) | 0,015 |
| Glyoxal/AGU(MHEC) (mol/mol) | 0,046 |
| Säure/AGU(MHEC) (mol/mol) | 0,008 |
| NaH₂PO₄*H₂O/AGU(MHEC) (mol/mol) | 0 |
| Na₂HPO₄/AGU(MHEC) (mol/mol) | 0 |
| Säure | Zitronensäure |

| **vernetzte MHEC** | |
|---|---|
| pH | 5,7 |
| Viskosität (mPas) | 12140 |
| Gesamtglyoxal (ppm) | 13885 |
| freies Glyoxal (ppm) | 1279 |
| AZ (min) | 29 |
| EZ (min) | 43 |

| ***gealterte* vernetzte MHEC** | |
|---|---|
| pH | 4,8 |
| Viskosität (mPas) | 9580 |
| AZ (min) | 42 |
| EZ (min) | 57 |
| Nachvernetzung, [gealt.AZ*100/AZ-100] (%) | 45 |

### Beispiel 2

Wasserfeuchte MHEC (200 g Trockensubstanz) mit einem durchschnittlichen Substitutionsgrad DS (Methyl) von 1,55 und einen molaren Substitutionsgrad MS (Hydroxyethyl) von 0,22 und einer Viskosität von 16000 mPa·s wurde in einem Laborkneter Typ LK5 der Firma Erweka Apparatebau GmbH vorgelegt und dort mit einer wässrigen Lösung aus Wasser, Natriumdihydrogenphosphat·H₂O, Dinatriumhydrogenphosphat und Glyoxal vermischt. Die Zielfeuchte der MHEC von 73 % wurde dabei mit Eis eingestellt. Nach vollständiger Zugabe wurde alles für 30 min verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % wurde erreicht.

| Ansatz-Nr. | **1** (Vergleich) | **2-1** (Vergleich) | **2-2** (Vergleich) |
|---|---|---|---|
| **Puffer** | | | |
| NaOH/AGU(MHEC) (mol/mol) | 0,015 | 0 | 0 |
| Glyoxal/AGU(MHEC) (mol/mol) | 0,046 | 0,046 | 0,023 |
| Säure/AGU(MHEC) (mol/mol) | 0,008 | 0 | 0 |
| NaH₂PO₄*H₂O/AGU(MHEC) (mol/mol) | 0 | 0,008 | 0,008 |
| Na₂HPO₄/AGU(MHEC) (mol/mol) | 0 | 0,008 | 0,008 |
| Säure | Zitronensäure | - | - |

| **vernetzte MHEC PRODUKTEIGENSCHAFTEN** | | | |
|---|---|---|---|
| pH | 5,7 | 6,9 | 7,0 |
| Viskosität (mPas) | 12140 | 12200 | 12400 |
| Gesamtglyoxal (ppm) | 13885 | 15167 | 6796 |
| freies Glyoxal (ppm) | 1279 | 1700 | 669 |
| AZ (min) | 29 | 22 | 14 |
| EZ (min) | 43 | 39 | 26 |

| ***gealterte* vernetzte MHEC** | | | |
|---|---|---|---|
| pH | 4,8 | 4,3 | 5,0 |
| Viskosität (mPas) | 9580 | 10980 | 10140 |
| AZ (min) | 42 | 42 | 18 |
| EZ (min) | 57 | 71 | 28 |
| Nachvernetzung, [gealt.AZ*100/AZ-100] (%) | 45 | 91 | 29 |

Es wird ersichtlich, dass unter Verwendung des Phosphatpuffers (Beispiele 2-1 und 2-2) im Vergleich zum Celluloseether (Beispiel 1), produziert nach dem Stand der Technik, der pH des Celluloseethers erhöht und die Viskosität vor der Alterung identisch ist. Nach Alterung der Proben fiel die Viskosität auf ein ähnliches Niveau ab. Aufgrund der pH-Erhöhung des Celluloseethers unter Verwendung des Phosphatpuffers bei der Glyoxalvernetzung ist die Anquellverzögerung AZ niedriger. Die Nachvernetzung, erfasst durch die Simulation der Alterung, war allerdings für die Celluloseether unter Verwendung der Phosphatpuffer (Beispiel 2-1) erhöht.

### Beispiel 3

Wasserfeuchte MHEC (200 g Trockensubstanz) mit einem durchschnittlichen Substitutionsgrad DS (Methyl) von 1,55 und einen molaren Substitutionsgrad MS (Hydroxyethyl) von 0,22 und einer Viskosität von 16000 mPa·s wurde in einem Laborkneter Typ LK5 der Firma Erweka Apparatebau GmbH vorgelegt und dort mit einer wässrigen Lösung aus Natriumdihydrogenphosphat·H₂O, Dinatriumhydrogenphosphat, Zitronensäure, Wasser und Glyoxal vermischt. Die Zielfeuchte der MHEC von 73 % wurde dabei mit Eis eingestellt. Nach vollständiger Zugabe wurde alles 30 min lang verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5% wurde erreicht.

| Ansatz-Nr. | 2-1 (Vergleich) | 2-2 (Vergleich) | 3-1 | 3-2 |
|---|---|---|---|---|
| **Puffer** | | | | |
| NaOH/AGU(MHEC) (mol/mol) | 0 | 0 | 0 | 0 |
| Glyoxal/AGU(MHEC) (mol/mol) | 0,046 | 0,023 | 0,046 | 0,023 |
| Säure/AGU(MHEC) (mol/mol) | 0 | 0 | 0,004 | 0,004 |
| NaH₂PO₄*H₂O/AGU(MHEC) (mol/mol) | 0,008 | 0,008 | 0,008 | 0,008 |
| Na₂HPO₄/AGU(MHEC) (mol/mol) | 0,008 | 0,008 | 0,008 | 0,008 |
| Säure | - | - | Zitronensäure | Zitronensäure |

| **vernetzte MHEC PRODUKTEIGENSCHAFTEN** | | | | |
|---|---|---|---|---|
| pH | 6,9 | 7,0 | 5,7 | 6,0 |
| Viskosität (mPas) | 12200 | 12400 | 10980 | 11900 |
| Gesamtglyoxal (ppm) | 15167 | 6796 | 14760 | 7957 |
| freies Glyoxal (ppm) | 1700 | 669 | 2168 | 1028 |
| AZ (min) | 22 | 14 | 34 | 37 |
| EZ (min) | 39 | 26 | 48 | 51 |

| ***gealterte* vernetzte MHEC** | | | | |
|---|---|---|---|---|
| pH | 4,3 | 5,0 | 4,3 | 5,0 |
| Viskosität (mPas) | 10980 | 10140 | 8800 | 7220 |
| AZ (min) | 42 | 18 | 44 | 37 |
| EZ (min) | 71 | 28 | 58 | 50 |
| Nachvernetzung, [gealt.AZ*100/AZ-100] (%) | 91 | 29 | 29 | 0 |

Durch den Zusatz an Zitronensäure als Katalysator für die Glyoxalvernetzung zum Phosphatpuffer war die AZ deutlich erhöht. Allerdings waren die Produkte nicht lagerstabil, da die Viskosität nach der Alterung deutlich stärker abnahm, als die einer MHEC ohne Zusatz von Säure in der Glyoxallösung. Die Nachvernetzung nach der Alterung war durch den Zusatz an Zitronensäure gesunken. Damit war die Glyoxalvernetzung effizienter; sie wurde durch die Säure katalysiert.

### Beispiel 4

Wasserfeuchte MHEC (200 g Trockensubstanz) mit einem durchschnittlichen Substitutionsgrad DS (Methyl) von 1,55 und einen molaren Substitutionsgrad MS (Hydroxyethyl) von 0,22 und einer Viskosität von 16000 mPa·s wurde in einem Laborkneter Typ LK5 der Firma Erweka Apparatebau GmbH vorgelegt und dort mit einer wässrigen Lösung aus Natriumdihydrogenphosphat·H₂O, Dinatriumhydrogenphosphat, Milchsäure, Wasser und Glyoxal vermischt. Die Zielfeuchte der MHEC von 73 % wurde mit Eis eingestellt. Nach vollständiger Zugabe wurde alles 30 min lang verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % wurde so erreicht.

| Ansatz-Nr. | 1 (Vergleich) | 2-1 (Vergleich) | 4-1 | 4-2 |
|---|---|---|---|---|
| **Puffer** | | | | |
| NaOH/AGU(MHEC) (mol/mol) | 0,015 | 0 | 0 | 0 |
| Glyoxal/AGU(MHEC) (mol/mol) | 0,046 | 0,046 | 0,046 | 0,023 |
| Säure/AGU(MHEC) (mol/mol) | 0,008 | 0 | 0,009 | 0,009 |
| NaH₂PO₄*H₂O/AGU(MHEC) (mol/mol) | 0 | 0,008 | 0,008 | 0,008 |
| Na₂HPO₄/AGU(MHEC) (mol/mol) | 0 | 0,008 | 0,008 | 0,008 |
| Säure | Zitronensäure | - | Milchsäure | Milchsäure |

| **vernetzte MHEC** | | | | |
|---|---|---|---|---|
| pH | 5,7 | 6,9 | 6,5 | 6,4 |
| Viskosität (mPas) | 12140 | 12200 | 11560 | 11920 |
| Gesamtglyoxal (ppm) | 13885 | 15167 | 15529 | 7373 |
| freies Glyoxal (ppm) | 1279 | 1700 | 1527 | 527 |
| AZ (min) | 29 | 22 | 39 | 25 |
| EZ (min) | 43 | 39 | 58 | 37 |

| ***gealterte* vernetzte MHEC** | | | | |
|---|---|---|---|---|
| pH | 4,8 | 4,3 | 4,2 | 4,4 |
| Viskosität (mPas) | 9580 | 10980 | 11220 | 10320 |
| AZ (min) | 42 | 42 | 50 | 30 |
| EZ (min) | 57 | 71 | 72 | 42 |
| Nachvernetzung, [gealt.AZ*100/AZ-100] (%) | 45 | 91 | 28 | 20 |

Durch den Zusatz an Milchsäure als Katalysator für die Glyoxalvernetzung zum Phosphatpuffer war die AZ deutlich erhöht. Damit war es möglich, den Einsatz an Glyoxal um die Hälfte zu reduzieren. Folglich war auch der Gesamtgehalt an Glyoxal und der Gehalt an freiem Glyoxal in der MHEC erheblich reduziert. Das Produkt war nicht mehr kennzeichnungspflichtig. Der Viskositätsverlust nach der Alterung war gering und ähnlich der bei Verwendung eines reinen Phosphatpuffers. Die Nachvernetzung nach der Alterung war durch den Zusatz an Milchsäure niedriger als bei der MHEC ohne Zusatz von Säure im Phosphatpuffer.

### Beispiel 5

Wasserfeuchte MHEC (200 g Trockensubstanz) mit einem durchschnittlichen Substitutionsgrad DS (Methyl) von 1,55 und einen molaren Substitutionsgrad MS (Hydroxyethyl) von 0,22 und einer Viskosität von 16000 mPa·s wurde in einem Laborkneter Typ LK5 der Firma Erweka Apparatebau GmbH vorgelegt und dort mit einer wässrigen Lösung aus Natriumdihydrogenphosphat·H₂O, Dinatriumhydrogenphosphat, Essigsäure, Wasser und Glyoxal vermischt. Die Zielfeuchte der MHEC von 73 % wurde dabei mit Eis eingestellt. Nach vollständiger Zugabe wurde alles 30 min lang verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % wurde erreicht.

| Ansatz-Nr. | 1 (Vergleich) | 2-1 (Vergleich) | 2-2 (Vergleich) | 5-1 |
|---|---|---|---|---|
| **Puffer** | | | | |
| NaOH/AGU(MHEC) (mol/mol) | 0,015 | 0 | 0 | 0 |
| Glyoxal/AGU(MHEC) (mol/mol) | 0,046 | 0,046 | 0,023 | 0,023 |
| Säure/AGU(MHEC) (mol/mol) | 0,008 | 0 | 0 | 0,008 |
| NaH₂PO₄*H₂O/AGU(MHEC) (mol/mol) | 0 | 0,008 | 0,008 | 0,008 |
| Na₂HPO₄/AGU(MHEC) (mol/mol) | 0 | 0,008 | 0,008 | 0,008 |
| Säure | Zitronensäure | - | - | Essigsäure |

| **vernetzte MHEC** | | | | |
|---|---|---|---|---|
| pH | 5,7 | 6,9 | 7,0 | 6,4 |
| Viskosität (mPas) | 12140 | 12200 | 12400 | 12260 |
| Gesamtglyoxal (ppm) | 13885 | 15167 | 6796 | 7835 |
| freies Glyoxal (ppm) | 1279 | 1700 | 669 | 691 |
| AZ (min) | 29 | 22 | 14 | 27 |
| EZ (min) | 43 | 39 | 26 | 42 |

| ***gealterte* vernetzte MHEC** | | | | |
|---|---|---|---|---|
| pH | 4,8 | 4,3 | 5,0 | 4,8 |
| Viskosität (mPas) | 9580 | 10980 | 10140 | 11080 |
| AZ (min) | 42 | 42 | 18 | 28 |
| EZ (min) | 57 | 71 | 28 | 40 |
| Nachvernetzung, [gealt.AZ*100/AZ-100] (%) | 45 | 91 | 29 | 4 |

Durch den Zusatz an Essigsäure als Katalysator für die Glyoxalvernetzung zum Phosphatpuffer konnte die AZ selbst bei Halbierung der eingesetzten Menge an Glyoxal erhalten werden. Demzufolge waren auch die Werte für Gesamtglyoxal und ungebundenes bzw. freies Glyoxal in der MHEC deutlich gesunken. Das Produkt war nicht mehr kennzeichnungspflichtig. Der Viskositätsverlust nach der Alterung war gering und ähnlich der bei Verwendung eines reinen Phosphatpuffers. Die Nachvernetzung nach der Alterung war durch den Zusatz an Essigsäure niedriger als bei der MHEC ohne Zusatz von Säure im Phosphatpuffer.

### Beispiel 6

Wasserfeuchte MHEC (200 g Trockensubstanz) mit einem durchschnittlichen Substitutionsgrad DS (Methyl) von 1,55 und einen molaren Substitutionsgrad MS (Hydroxyethyl) von 0,22 und einer Viskosität von 16000 mPa·s wurde in einem Laborkneter Typ LK5 der Firma Erweka Apparatebau GmbH vorgelegt und dort mit einer wässrigen Lösung aus Natriumdihydrogenphosphat·H₂O, Dinatriumhydrogenphosphat, Adipinsäure, Wasser und Glyoxal vermischt. Die Zielfeuchte der MHEC von 73 % wurde dabei mit Eis eingestellt. Nach vollständiger Zugabe wurde alles 30 min lang verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % wurde erreicht.

| Ansatz-Nr. | 1 (Vergleich) | 2-1 (Vergleich) | 2-2 (Vergleich) | 6-1 | 6-2 | 6-3 |
|---|---|---|---|---|---|---|
| **Puffer** | | | | | | |
| NaOH/AGU(MHEC) (mol/mol) | 0,015 | 0 | 0 | 0 | 0 | 0 |
| Glyoxal/AGU(MHEC) (mol/mol) | 0,046 | 0,046 | 0,023 | 0,046 | 0,023 | 0,016 |
| Säure/AGU(MHEC) (mol/mol) | 0,008 | 0 | 0 | 0,008 | 0,004 | 0,008 |
| NaH₂PO₄*H₂O/AGU(MHEC) (mol/mol) | 0 | 0,008 | 0,008 | 0,008 | 0,008 | 0,008 |
| Na₂HPO₄/AGU(MHEC) (mol/mol) | 0 | 0,008 | 0,008 | 0,008 | 0,008 | 0,008 |
| Säure | Zitronensäure | - | - | Adipinsäure | Adipinsäure | Adipinsäure |

| **vernetzte MHEC** | | | | | | |
|---|---|---|---|---|---|---|
| pH | 5,7 | 6,9 | 7,0 | 5,0 | 5,8 | 5,0 |
| Viskosität (mPas) | 12140 | 12200 | 12400 | 12200 | 12260 | 11820 |
| Gesamtglyoxal (ppm) | 13885 | 15167 | 6796 | 16033 | 7202 | 7243 |
| freies Glyoxal (ppm) | 1279 | 1700 | 669 | 1121 | 543 | < 400 |
| AZ (min) | 29 | 22 | 14 | 55 | 37 | 34 |
| EZ (min) | 43 | 39 | 26 | 77 | 50 | 52 |

| ***gealterte* vernetzte MHEC** | | | | | | |
|---|---|---|---|---|---|---|
| pH | 4,8 | 4,3 | 5,0 | 4,1 | 4,3 | 4,5 |
| Viskosität (mPas) | 9580 | 10980 | 10140 | 10880 | 10220 | 10160 |
| AZ (min) | 42 | 42 | 18 | 67 | 37 | 27 |
| EZ (min) | 57 | 71 | 28 | 92 | 51 | 40 |
| Nachvernetzung, [gealt.AZ*100/AZ-100] (%) | 45 | 91 | 29 | 22 | 0 | 0 |

Durch den Zusatz an Adipinsäure als Katalysator für die Glyoxalvernetzung zum Phosphatpuffer war die AZ signifikant erhöht. Damit war es möglich, den Einsatz an Glyoxal um zwei Drittel zu reduzieren. Entsprechend war auch das Gesamtglyoxal und das freie Glyoxal in der MHEC erheblich reduziert. Der Viskositätsverlust nach der Alterung war gering und ähnlich der bei Verwendung eines reinen Phosphatpuffers. Die Nachvernetzung nach der Alterung war durch den Zusatz an Adipinsäure marginal oder nicht mehr festzustellen. Das Produkt war somit nicht kennzeichnungspflichtig. Dabei glich die AZ und die Lagerstabilität der eines Celluloseethers hergestellt nach dem Stand der Technik.

### Beispiel 7

Wasserfeuchte MHEC (200 g Trockensubstanz) mit einem durchschnittlichen Substitutionsgrad DS (Methyl) von 1,62 und einem molaren Substitutionsgrad MS (Hydroxyethyl) von 0,21 und einer Viskosität von 5000 mPa·s wurde in einem Laborkneter Typ LK5 der Firma Erweka Apparatebau GmbH vorgelegt. Dort wurde der wasserfeuchte Celluloseether entweder mit einer wässrigen Lösung aus Glyoxal, Wasser, Zitronensäure und Natronlauge (Ansatz-Nr. 7-1, als Vergleich) oder einer wässrigen Lösung aus Natriumdihydrogenphosphat·H₂O, Dinatriumhydrogenphosphat, Wasser, Glyoxal (Ansatz-Nr. 7-2, als Vergleich) und mit der in der Tabelle angebenen Säure (Ansatz-Nr. 7-3 bis 7-6) vermischt. Die Zielfeuchte der MHEC von 73 % wurde dabei mit Eis eingestellt. Nach vollständiger Zugabe wurde alles 30 min lang verknetet. Anschließend wurde das feuchte Produkt in einem Wirbelschichttrockner handtrocken vorgetrocknet und mit einer Mühle der Fima Alpine (Typ D 100 UPZ) unter Einsatz eines 180 µm Siebes trocken gemahlen. Eine Endfeuchte von weniger als 5 % wurde auf diese Weise erreicht.

| Ansatz-Nr. | **7-1 (Vergleich)** | **7-2 (Vergleich)** | **7-3** | **7-4** | **7-5** | **7-6** |
|---|---|---|---|---|---|---|
| **Puffer** | | | | | | |
| NaOH/AGU(MHEC) (mol/mol) | 0,015 | 0 | 0 | 0 | 0 | 0 |
| Glyoxal/AGU(MHEC) (mol/mol) | 0,046 | 0,023 | 0,023 | 0,023 | 0,023 | 0,023 |
| Säure/AGU(MHEC) (mol/mol) | 0,004 | 0 | 0,008 | 0,008 | 0,008 | 0,008 |
| NaH₂PO₄*H₂O/AGU(MHEC) (mol/mol) | 0 | 0,008 | 0,008 | 0,008 | 0,008 | 0,008 |
| Na₂HPO₄/AGU(MHEC) (mol/mol) | 0 | 0,008 | 0,008 | 0,008 | 0,008 | 0,008 |
| Säure | Zitronensäure | --- | Milchsäure | Salicylsäure | Essigsäure | Adipinsäure |

| **vernetzte MHEC** | | | | | | |
|---|---|---|---|---|---|---|
| pH | 5,7 | 7,0 | 6,2 | 5,9 | 6,5 | 5,1 |
| Viskosität (mPas) | 4830 | 5010 | 4960 | 5050 | 4530 | 5030 |
| Gesamtglyoxal (ppm) | 14683 | 7371 | 7621 | 7664 | 8234 | 6896 |
| freies Glyoxal (ppm) | 1085 | 596 | 612 | 735 | 320 | 324 |
| AZ (min) | 31 | 14 | 27 | 34 | 29 | 36 |
| EZ (min) | 48 | 21 | 38 | 49 | 41 | 54 |

| ***gealterte* vernetzte MHEC** | | | | | | |
|---|---|---|---|---|---|---|
| pH | 4,6 | 4,9 | 4,2 | 4,4 | 4,5 | 4,4 |
| Viskosität (mPas) | 3970 | 4400 | 4170 | 4130 | 4390 | 4690 |
| AZ (min) | 46 | 16 | 24 | 31 | 26 | 31 |
| EZ (min) | 61 | 24 | 32 | 42 | 34 | 42 |

Aus der Tabelle wird ersichtlich, dass auch für andere Ausgangsviskositäten der MHEC die positiven Effekte mit den neuen Vernetzer/Puffer-Lösungen erzielt werden konnten.

## Patentansprüche

1. Verfahren zur Herstellung von Cellulosederivaten, die mit Glyoxal reversibel vernetzt und dadurch verzögert wasserlöslich sind, mit den Schritten:
a) Bereitstellen eines wasserfeuchten Cellulosederivats
b) Bereitstellen einer wässrigen Lösung, die Glyoxal, ein oder mehrere Erdalkali- und/oder Alkalisalze der Phosphorsäure als Puffersubstanz enthält,
c) Mischen der wässrigen Lösung aus b) mit dem Cellulosederivat aus a) bei einer Temperatur zwischen 20 bis 70 °C um eine reversible Vernetzung des Cellulosederivats zu erreichen,
d) Trocknen des reversibel vernetzten Cellulosederivats und
e) Mahlen des Cellulosederivat,
wobei die Schritte d) und e) zu einer Mahltrocknung kombiniert sein können,
**dadurch gekennzeichnet, dass** die wässrige Lösung gemäß b) eine ein- oder mehrwertige organische Säure enthält, wobei die Menge der ein-, zwei-, drei- oder mehrwertigen organischen Säure 0,002 bis 0,015 mol und die Menge des Glyoxals 0,010 bis 0,050 mol beträgt, jeweils bezogen auf 1 mol Anhydroglucoseeinheiten des Cellulosederivats und das molare Verhältnis von einwertiger organischer Säure zu Glyoxal im Bereich von 1 zu 1 bis 1 zu 6, das Verhältnis von zweiwertiger organischer Säure zu Glyoxal im Bereich von 1 zu 1 bis 1 zu 10, das Verhältnis von dreiwertiger organischer Säure zu Glyoxal im Bereich von 1 zu 2 bis 1 zu 12, liegt.

2. Verfahren gemäß Anspruch 1, **dadurch gekennzeichnet, dass** das Cellulosederivat ein nicht-ionischer Celluloseether, bevorzugt Methylhydroxyethylcellulose, Methylhydroxypropylcellulose, Methylcellulose oder eine Mischung davon, ist.

3. Verfahren gemäß Anspruch 1 bis 2, **dadurch gekennzeichnet, dass** als Cellulosederivat ein Celluloseether eingesetzt wird, der nach einer Heißwasserwäsche als Filterkuchen mit einem Gehalt an Trockensubstanz von 30 bis 70 % vorliegt.

4. Verfahren gemäß Anspruch 3, **dadurch gekennzeichnet, dass** der Filterkuchen mit einer Vernetzerlösung bestehend aus Glyoxal, Salze der Phosphorsäure, einer organischen Säure und gegebenenfalls Wasser unter kontinuierlichem Durchmischen zugegeben und verknetet wird, anschließend getrocknet und gemahlen oder einer Mahltrocknung unterzogen wird.

5. Verfahren gemäß Anspruch 4, **dadurch gekennzeichnet, dass** Glyoxal in einem Anteil von nicht mehr als 0,035 mol pro mol Anhydroglucoseeinheiten des Celluloseethers zum dem Celluloseether, besonders bevorzugt 0,01 bis 0,03 mol Glyoxal pro mol an Anhydroglucoseeinheiten des Celluloseethers, zu dem Celluloseether zugemischt wird.

6. Verfahren gemäß einem oder mehreren der Ansprüche 1 bis 5, **dadurch gekennzeichnet, dass** die ein- oder mehrwertige organische Säure in einem Anteil von 0,004 bis 0,010 mol pro mol Anhydroglucoseeinheit des Celluloseethers zu dem Celluloseether zugemischt wird.

7. Verfahren gemäß einem oder mehreren der Ansprüche 1 bis 6, **dadurch gekennzeichnet, dass** als ein- oder mehrwertige organische Säure eine aliphatische, aromatische und/oder heterocyclische vorzugsweise eine aliphatische, gesättigte oder ungesättigte Carbonsäure mit 1 bis 7 Kohlenstoffatomen und einer bis drei Carboxylgruppe(n) eingesetzt wird, wobei die organische Säure funktionelle Gruppen aufweisen kann, bevorzugt Hydroxylgruppen und/oder Aminogruppen.

8. Verfahren gemäß Anspruch 7, **dadurch gekennzeichnet, dass** als ein- oder mehrwertige organische Säure Essigsäure, Milchsäure, Salicylsäure, Adipinsäure, Zitronensäure, Weinsäure und/oder Äpfelsäure eingesetzt wird, bevorzugt Milchsäure oder Adipinsäure.

9. Verfahren gemäß Anspruch 1, **dadurch gekennzeichnet, dass** die Alkalisalze der Phosphorsäure Natriumdihydrogenphosphat und Dinatriumhydrogenphosphat sind, wobei Natriumdihydrogenphosphat und Dinatriumhydrogenphosphat bevorzugt jeweils in einerMenge von 0,003 bis 0,015 mol pro 1 mol Anhydroglucoseeinheiten des Celluloseethers, besonders bevorzugt von 0,005 bis 0,009 mol pro 1 mol Anhydroglucoseeinheiten des Celluloseethers, zum Celluloseether zugemischt werden.

10. Verfahren gemäß Anspruch 1, **dadurch gekennzeichnet, dass** die Puffer/Vernetzer-Lösung einen pH-Wert zwischen 3 und 8 aufweist, bevorzugt zwischen 4 und 6,5.

11. Reversibel mit Glyoxal vemetztes Cellulosederivat, **dadurch gekennzeichnet, dass** es eine ein- oder mehrwertige organische Säure in einem Anteil von 0,002 bis 0,015 mol und Glyoxal in einem Anteil von 0,010 bis 0,050 mol, jeweils bezogen auf 1 mol Anhydroglucoseeinheiten des Cellulosederivats, sowie ein oder mehrere Erdalkali- und/oder Alkalisalze der Phosphorsäure als Puffersubstanz enthält und das molare Verhältnis von ein- oder mehrwertiger organischer Säure zu Glyoxal im Bereich von 1 zu 1 bis 1 zu 12 liegt.

12. Reversibel mit Glyoxal vernetztes Cellulosederivat gemäß Anspruch 11, **dadurch gekennzeichnet, dass** es ein nicht-ionischer Celluloseether, bevorzugt Methylhydroxyethylcellulose, Methylhydroxypropylcellulose, Methylcellulose oder eine Mischung davon, ist.

13. Reversibel mit Glyoxal vernetztes Cellulosederivat gemäß Anspruch 11 oder 12, **dadurch gekennzeichnet, dass** die ein- oder mehrwertige Säure Essigsäure, Milchsäure, Salicylsäure, Adipinsäure, Zitronensäure, Weinsäure und/oder Äpfelsäure ist, bevorzugt Milchsäure oder Adipinsäure.

14. Reversibel mit Glyoxal vernetztes Cellulosederivat gemäß einem oder mehreren der Ansprüche 11 bis 13, **dadurch gekennzeichnet, dass** die Alkalisalze der Phosphorsäure Natriumdihydrogenphosphat und Dinatriumhydrogenphosphat sind und dass die darin enthaltene Menge an Natriumdihydrogenphosphat und Dinatriumhydrogenphosphat jeweils 0,002 bis 0,015 mol pro 1 mol Anhydroglucoseeinheiten des Celluloseethers, bevorzugt 0,005 bis 0,009 mol pro 1 mol Anhydroglucoseeinheiten des Celluloseethers beträgt.

15. Reversibel mit Glyoxal vernetztes Cellulosederivat gemäß einem oder mehreren der Ansprüche 11 bis 14, **dadurch gekennzeichnet, dass** es weniger als 1000 ppm an freiem Glyoxal enthält.

## Claims

1. Process for producing cellulose derivatives reversibly crosslinked with glyoxal and thus having delayed water-solubility, with the steps of:
a) providing a water-moist cellulose derivative,
b) providing an aqueous solution comprising glyoxal, one or more alkaline earth metal salts and/or alkali metal salts of phosphoric acid as buffer substance,
c) mixing the aqueous solution from b) with the cellulose derivative from a) at a temperature between 20 to 70 °C to achieve reversible crosslinking of the cellulose derivative,
d) drying the reversibly crosslinked cellulose derivative and
e) grinding the cellulose derivative,
where steps d) and e) may be combined into a grinding-drying operation,
**characterized in that** the aqueous solution as per b) comprises an organic acid having a basicity of one or more, where the amount of the monobasic, dibasic, tribasic or polybasic organic acid is 0.002 to 0.015 mol and the amount of the glyoxal is 0.010 to 0.050 mol, in each case per mole of anhydroglucose units of the cellulose derivative, and the molar ratio of monobasic organic acid to glyoxal is in the range from 1:1 to 1:6, the ratio of dibasic organic acid to glyoxal is in the range from 1:1 to 1:10, and the ratio of tribasic organic acid to glyoxal is in the range from 1:2 to 1:12.

2. Process according to Claim 1, **characterized in that** the cellulose derivative is a nonionic cellulose ether, preferably methylhydroxyethylcellulose, methylhydroxypropylcellulose, methylcellulose, or a mixture thereof.

3. Process according to Claim 1 to 2, **characterized in that** the cellulose derivative used is a cellulose ether which after a hot-water wash takes the form of a filter cake having a dry-matter content of 30 to 70 %.

4. Process according to Claim 3, **characterized in that** the filter cake is added and kneaded with a crosslinker solution consisting of glyoxal, salts of phosphoric acid, an organic acid and optionally water with continuous mixing and is subsequently dried and ground or subjected to a grinding-drying operation.

5. Process according to Claim 4, **characterized in that** glyoxal is admixed to the cellulose ether in a fraction of not more than 0.035 mol per mole of anhydroglucose units of the cellulose ether; more preferably 0.01 to 0.03 mol of glyoxal is admixed to the cellulose ether per mole of anhydroglucose units of the cellulose ether.

6. Process according to one or more of Claims 1 to 5, **characterized in that** the organic acid having a basicity of one or more is admixed to the cellulose ether in a fraction of 0.004 to 0.010 mol per mole of anhydroglucose unit of the cellulose ether.

7. Process according to one or more of Claims 1 to 6, **characterized in that** the organic acid having a basicity of one or more used is an aliphatic, aromatic and/or heterocyclic, preferably an aliphatic, saturated or unsaturated carboxyolic acid having 1 to 7 carbon atoms and one to three carboxyl group(s), where the organic acid may contain functional groups, preferably hydroxyl groups and/or amino groups.

8. Process according to Claim 7, **characterized in that** the organic acid having a basicity of one or more used is acetic acid, lactic acid, salicylic acid, adipic acid, citric acid, tartaric acid and/or malic acid, preferably lactic acid or adipic acid.

9. Process according to Claim 1, **characterized in that** the alkali metal salts of phosphoric acid are sodium dihydrogenphosphate and disodium hydrogenphosphate, with sodium dihydrogenphosphate and disodium hydrogenphosphate being admixed to the cellulose ether preferably each in an amount of 0.003 to 0.015 mol per mole of anhydroglucose units of the cellulose ether, more preferably of 0.005 to 0.009 mol per mole of anhydroglucose units of the cellulose ether.

10. Process according to Claim 1, **characterized in that** the buffer/crosslinker solution has a pH of between 3 and 8, preferably of between 4 and 6.5.

11. Cellulose derivative reversibly crosslinked with glyoxal, **characterized in that** it comprises an organic acid having a basicity of one or more in a fraction of 0.002 to 0.015 mol and glyoxal in a fraction of 0.010 to 0.050 mol, in each case per mole of anhydroglucose units of the cellulose derivative, and also one or more alkaline earth metal salts and/or alkali metal salts of phosphoric acid as buffer substance, and the molar ratio of organic acid having a basicity of one or more to glyoxal is in the range from 1:1 to 1:12.

12. Cellulose derivative reversibly crosslinked with glyoxal according to Claim 11, **characterized in that** it is a nonionic cellulose ether, preferably methylhydroxyethylcellulose, methylhydroxypropylcellulose, methylcellulose, or a mixture thereof.

13. Cellulose derivative reversibly crosslinked with glyoxal according to Claim 11 or 12, **characterized in that** the acid having a basicity of one or more is acetic acid, lactic acid, salicylic acid, adipic acid, citric acid, tartaric acid and/or malic acid, preferably lactic acid or adipic acid.

14. Cellulose derivative reversibly crosslinked with glyoxal according to one or more of Claims 11 to 13, **characterized in that** the alkali metal salts of phosphoric acid are sodium dihydrogenphosphate and disodium hydrogenphosphate and **in that** the amount of sodium dihydrogenphosphate and disodium hydrogenphosphate contained therein is in each case 0.002 to 0.015 mol per mole of anhydroglucose units of the cellulose ether, preferably 0.005 to 0.009 mol per mole of anhydroglucose units of the cellulose ether.

15. Cellulose derivative reversibly crosslinked with glyoxal according to one or more of Claims 11 to 14, **characterized in that** it contains less than 1000 ppm of free glyoxal.

## Revendications

1. Procédé de préparation de dérivés de cellulose réticulés de manière réversible avec du glyoxal et présentant ainsi une solubilité retardée dans l'eau, comprenant les étapes suivantes :
a) la fourniture d'un dérivé de cellulose humide ;
b) la fourniture d'une solution aqueuse contenant du glyoxal et, en tant que substance tampon, un ou plusieurs sels alcalino-terreux et/ou alcalins de l'acide phosphorique ;
c) le mélange de la solution aqueuse de l'étape b) avec le dérivé de cellulose de l'étape a), à une température comprise entre 20 et 70 °C, afin d'obtenir une réticulation réversible du dérivé de cellulose ;
d) le séchage du dérivé de cellulose réticulé de manière réversible ; et
e) le broyage du dérivé de cellulose,
les étapes d) et e) pouvant être combinées sous la forme d'un séchage-broyage,
**caractérisé en ce que** la solution aqueuse selon l'étape b) contient un acide organique monovalent ou polyvalent, la quantité d'acide organique monovalent, divalent, trivalent ou de valence supérieure étant de 0,002 à 0,015 mol et la quantité de glyoxal étant de 0,010 à 0,050 mol, chacune rapportée à 1 mol d'unités anhydroglucose du dérivé de cellulose, et le rapport molaire de l'acide organique monovalent au glyoxal étant dans la plage de 1:1 à 1:6, le rapport de l'acide organique divalent au glyoxal étant dans la plage de 1:1 à 1:10 et le rapport de l'acide organique trivalent au glyoxal étant dans la plage de 1:2 à 1:12.

2. Procédé selon la revendication 1, **caractérisé en ce que** le dérivé de cellulose est un éther de cellulose non ionique, de préférence de la méthylhydroxyéthylcellulose, de la méthylhydroxypropylcellulose, de la méthylcellulose ou un mélange de celles-ci.

3. Procédé selon les revendications 1 à 2, **caractérisé en ce qu'**un éther de cellulose, qui se présente après un lavage à l'eau chaude sous la forme d'un gâteau de filtration ayant une teneur en matière sèche de 30 à 70 %, est utilisé en tant que dérivé de cellulose.

4. Procédé selon la revendication 3, **caractérisé en ce qu'**une solution de réticulation constituée de glyoxal, de sels de l'acide phosphorique, d'un acide organique et éventuellement d'eau est ajoutée au gâteau de filtration sous mélange continu et malaxée avec celui-ci, puis le gâteau de filtration est séché et broyé ou soumis à un séchage-broyage.

5. Procédé selon la revendication 4, **caractérisé en ce que** du glyoxal est mélangé à l'éther de cellulose en une proportion ne dépassant pas 0,035 mol par mole d'unités anhydroglucose de l'éther de cellulose, de manière particulièrement préférée de 0,01 à 0,03 mol de glyoxal par mole d'unités anhydroglucose de l'éther de cellulose.

6. Procédé selon une ou plusieurs des revendications 1 à 5, **caractérisé en ce que** l'acide organique monovalent ou polyvalent est mélangé à l'éther de cellulose en une proportion de 0,004 à 0,010 mol par mole d'unités anhydroglucose de l'éther de cellulose.

7. Procédé selon une ou plusieurs des revendications 1 à 6, **caractérisé en ce qu'**un acide carboxylique aliphatique, aromatique et/ou hétérocyclique, de préférence un acide carboxylique aliphatique, saturé ou insaturé, comportant 1 à 7 atomes de carbone et un à trois groupes carboxyle, est utilisé en tant qu'acide organique monovalent ou polyvalent, l'acide organique pouvant comporter des groupes fonctionnels, de préférence des groupes hydroxyle et/ou amino.

8. Procédé selon la revendication 7, **caractérisé en ce que** de l'acide acétique, de l'acide lactique, de l'acide salicylique, de l'acide adipique, de l'acide citrique, de l'acide tartrique et/ou de l'acide malique est utilisé en tant qu'acide organique monovalent ou polyvalent, de préférence de l'acide lactique ou de l'acide adipique.

9. Procédé selon la revendication 1, **caractérisé en ce que** les sels alcalins de l'acide phosphorique sont le dihydrogénophosphate de sodium et l'hydrogénophosphate disodique, le dihydrogénophosphate de sodium et l'hydrogénophosphate disodique étant de préférence mélangés à l'éther de cellulose chacun en une quantité de 0,003 à 0,015 mol pour 1 mol d'unités anhydroglucose de l'éther de cellulose, de manière particulièrement préférée de 0,005 à 0,009 mol pour 1 mol d'unités anhydroglucose de l'éther de cellulose.

10. Procédé selon la revendication 1, **caractérisé en ce que** la solution tampon/de réticulation présente un pH compris entre 3 et 8, de préférence entre 4 et 6,5.

11. Dérivé de cellulose réticulé de manière réversible avec du glyoxal, **caractérisé en ce qu'**il contient un acide organique monovalent ou polyvalent en une proportion de 0,002 à 0,015 mol et du glyoxal en une proportion de 0,010 à 0,050 mol, chacune rapportée à 1 mol d'unités anhydroglucose du dérivé de cellulose, ainsi qu'un ou plusieurs sels alcalino-terreux et/ou alcalins de l'acide phosphorique en tant que substance tampon, et **en ce que** le rapport molaire de l'acide organique monovalent ou polyvalent au glyoxal est dans la plage de 1:1 à 1:12.

12. Dérivé de cellulose réticulé de manière réversible avec du glyoxal selon la revendication 11, **caractérisé en ce qu'**il est un éther de cellulose non ionique, de préférence de la méthylhydroxyéthylcellulose, de la méthylhydroxypropylcellulose, de la méthylcellulose ou un mélange de celles-ci.

13. Dérivé de cellulose réticulé de manière réversible avec du glyoxal selon la revendication 11 ou 12, **caractérisé en ce que** l'acide monovalent ou polyvalent est l'acide acétique, l'acide lactique, l'acide salicylique, l'acide adipique, l'acide citrique, l'acide tartrique et/ou l'acide malique, de préférence l'acide lactique ou l'acide adipique.

14. Dérivé de cellulose réticulé de manière réversible avec du glyoxal selon une ou plusieurs des revendications 11 à 13, **caractérisé en ce que** les sels alcalins de l'acide phosphorique sont le dihydrogénophosphate de sodium et l'hydrogénophosphate disodique et **en ce que** la quantité de dihydrogénophosphate de sodium et d'hydrogénophosphate disodique qu'il contient est, pour chacun, de 0,002 à 0,015 mol pour 1 mol d'unités anhydroglucose de l'éther de cellulose, de préférence de 0,005 à 0,009 mol pour 1 mol d'unités anhydroglucose de l'éther de cellulose.

15. Dérivé de cellulose réticulé de manière réversible avec du glyoxal selon une ou plusieurs des revendications 11 à 14, **caractérisé en ce qu'**il contient moins de 1000 ppm de glyoxal libre.
